# EUROPEAN PATENT APPLICATION

(11) **EP 4 590 066 A1**
(43) Date of publication of application: **23.07.2025**
(21) Application number: 23864688.9
(22) Date of filing: 12.09.2023
(51) Int. Cl.: H04W 76/27

(54) **METHOD EXECUTED BY USER EQUIPMENT, AND USER EQUIPMENT**

(30) Priority: 14.09.2022 CN 202211118732
(71) Applicant: Sharp Kabushiki Kaisha, Sakai City, Osaka 590-8522 (JP)
(72) Inventor: LIU, Renmao, Shanghai 201206 (CN); ZHANG, Chongming, Shanghai 201206 (CN)
(74) Representative: Müller Hoffmann & Partner
(86) International application number: PCT/CN2023/118214
(87) International publication number: WO 2024/055956

(57) **Abstract**

The present application provides a method performed by user equipment, and user equipment. The method is performed during communication performed between the UE and a base station via a single path or multiple paths, and includes the following steps: receiving, by a remote UE, a notification message from a relay UE, wherein the message includes a first information element representing an indication type, and the value of the first information element is set by the relay UE; and upon receiving the notification message, determining, by the remote UE in an RRC connected state, whether the remote UE is operating in a single-path mode or a multi-path mode; if the remote UE is operating in the single-path mode, initiating, by the remote UE, an RRC connection re-establishment procedure, and if the remote UE is operating in the multi-path mode, further determining, by the remote UE, whether an SRB is a direct bearer, an indirect bearer, or a split SRB.

## Description

### TECHNICAL FIELD

The present invention relates to the technical field of wireless communications. More specifically, the present invention relates to a method performed by user equipment, and corresponding user equipment.

### BACKGROUND ART

In a cell covered by a base station, user equipment (UE) can directly communicate with the base station, and such a communication connection is called a direct connection. The UE may also be in communication connection with the base station via relay UE, and such a connection may be referred to as an indirect connection. In a scenario in which the UE communicates with the base station by means of the relay UE, the UE is called remote UE.

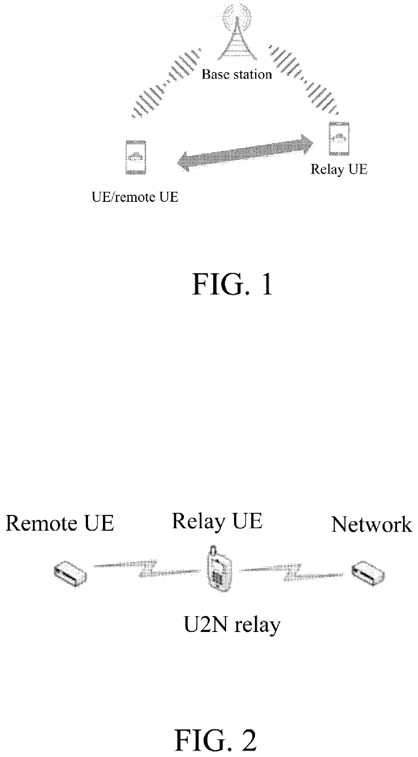

The remote UE may operate in a mode in which there is only an indirect connection, and such a mode may be referred to as a single-path communication mode. In addition, in order to improve uplink and downlink transmission rates and throughput of the UE, the UE may further simultaneously operate in a direct connection mode and an indirect connection mode. As shown in FIG. 1, in such an operating mode, the UE and the base station communicate with each other via different paths, so that the operating mode may also be referred to as a multi-path communication mode/communication mode with multiple paths.

In FIG. 1, a wireless communication mode is typically adopted between remote UE and a base station and between relay UE and the base station, for example, communication techniques and means such as 5G NR or LTE. Moreover, the remote UE and the relay UE may communicate with each other on the basis of a sidelink communication mode, or a Wi-Fi communication mode based on hotspot coverage, or a wired connection mode.

Due to signal quality or another reason, the relay UE may be instructed by the base station/network side to be handed over to a new cell. The relay UE that has been handed over notifies the remote UE connected thereto. In the prior art, upon receiving such a notification, the remote UE in the RRC connected state initiates an RRC connection re-establishment procedure.

However, if the remote UE is in the multi-path operating mode, upon receiving a notification message from the relay UE, the remote UE does not always need to re-establish the RRC connection. Therefore, how to prevent the remote UE from performing ineffective RRC connection re-establishment is an issue to be addressed.

### SUMMARY OF THE INVENTION

In order to address the aforementioned issue, the present invention provides a method performed by user equipment, and user equipment. Even in the case of, e.g., cell handover, upon receiving a notification from a relay UE, the remote UE can also appropriately re-establish an RRC connection according to whether the remote UE is operating in a multi-path mode or a single-path mode, thereby reliably avoiding ineffective RRC connection re-establishment.

According to an aspect of the present invention, provided is a method performed by user equipment, the method being performed during communication performed between the user equipment (UE) and a base station via a single path or multiple paths, comprising the following steps:
Receiving, by a remote UE, a notification message from a relay UE, wherein the message includes a first information element representing an indication type, and the value of the first information element is set by the relay UE; and
Upon receiving the notification message, determining, by the remote UE in a radio resource control (RRC) connected state, whether the remote UE is operating in a single-path mode or a multi-path mode,
If the remote UE is operating in the single-path mode, initiating, by the remote UE, an RRC connection re-establishment procedure, and
If the remote UE is operating in the multi-path mode, further determining, by the remote UE, whether a signaling radio bearer (SRB) is a direct bearer, an indirect bearer, or a split SRB.

In the above method performed by user equipment, preferably,
When the relay UE initiates transmission of the notification message due to an occurrence of a radio link failure (RLF) on a Uu interface between the relay UE and the base station, the value of the first information element is set to a first value;
When the relay UE initiates transmission of the notification message due to reception of a reconfiguration message including a synchronization identity, the value of the first information element is set to a second value;
When the relay UE initiates transmission of the notification message due to an occurrence of cell reselection, the value of the first information element is set to a third value; and
When the relay UE initiates transmission of the notification message due to an occurrence of an RRC connection setup failure or a connection resumption failure on a Uu interface, the value of the first information element is set to a fourth value.

In the above method performed by user equipment, preferably,
if the SRB is a direct bearer, the remote UE does not initiate the RRC connection re-establishment procedure;
If the SRB is an indirect bearer, the remote UE initiates the RRC connection re-establishment procedure; and
If the SRB is a split SRB, the remote UE further determines whether a primary path of the split SRB corresponds to a direct connection not via the relay UE or an indirect connection via the relay UE.

In the above method performed by user equipment, preferably,
in the case that the SRB is an indirect bearer, the remote UE further determines whether the value of the first information element included in the notification message is the second value,
If the value of the first information element is the second value, the remote UE does not initiate the RRC connection re-establishment procedure, and
If the value of the first information element is not the second value, the remote UE initiates the RRC connection re-establishment procedure.

In the above method performed by user equipment, preferably,
In the case that the SRB is a split SRB,
If a primary path thereof is a direct connection, the remote UE does not initiate the RRC connection re-establishment procedure, and
If the primary path thereof is an indirect connection, the remote UE initiates the RRC connection re-establishment procedure.

In the above method performed by user equipment, preferably,
If the SRB is a direct bearer or a split SRB, the remote UE initiates path failure reporting.

The foregoing method performed by user equipment, preferably, further comprises the following steps:
Receiving, by the relay UE from the base station, a reconfiguration message including a synchronization identity; and
Upon receiving the reconfiguration message including the synchronization identity, if a second information element of indication information representing that the notification message does not need to be transmitted to the remote UE is included therein, skipping, by the relay UE, initiating transmission of the notification message.

The foregoing method performed by user equipment, preferably, further comprises the following steps:
Receiving, by the relay UE from the base station, a reconfiguration message including a synchronization identity; and
Upon receiving the reconfiguration message including the synchronization identity, if a second information element of indication information representing that the notification message does not need to be transmitted to the remote UE is not included therein, initiating, by the relay UE, transmission of the notification message, and setting the value of the first information element to the second value.

In the above method performed by user equipment, preferably,

The path failure reporting comprises:
Initiating, by the remote UE, a failure information reporting procedure; and
Performing, by the remote UE, a sidelink UE information reporting procedure.

According to another aspect of the present invention, provided is a user equipment, comprising:
A processor; and
A memory storing instructions,
The instructions, when run by the processor, performing the method described above.

According to the method performed by user equipment and the corresponding user equipment according to the present invention, upon receiving a notification of, e.g., an occurrence of cell handover, from relay UE, remote UE appropriately re-establishes an RRC connection according to an operating mode thereof, thereby reliably avoiding ineffective RRC connection re-establishment.

### BRIEF DESCRIPTION OF THE DRAWINGS

FIG. 1 is a schematic diagram showing an operating mode (multi-path) in which a direct connection and an indirect connection are parallel, i.e., a multi-path communication mode.
FIG. 2 is a schematic diagram showing UE-to-network relay.
FIG. 3 is a schematic diagram showing an example of protocol layer structures of SRBs and a split SRB.
FIG. 4 is a schematic diagram showing another example of protocol layer structures of SRBs and a split SRB.
FIG. 5 is a flowchart showing a method performed by user equipment (UE) according to an embodiment of the present invention.
FIG. 6 is a simplified structural block diagram of a user equipment according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

Prior to the specific description, several terms mentioned in the present invention are illustrated as follows. The terms involved in the present invention shall have the meanings set forth below, unless otherwise indicated.
UE: User Equipment;
NR: New Radio;
LTE: Long Term Evolution;
eLTE: enhanced Long Term Evolution;
RRC: Radio Resource Control;
MAC: Medium Access Control (layer);
MAC CE: MAC Control Element;
SDAP: Service Data Adaptation Protocol;
SRAP: Sidelink Relay Adaptation Protocol;
RLC: Radio Link Control;
PDCP: Packet Data Convergence Protocol;
PHY: physical layer;
RB: radio bearer;
DRB: Data Radio Bearer;
SRB: Signaling Radio Bearer;
PDU: Protocol Data Unit;
SDU: Service Data Unit;
V2X: Vehicle-to-Everything.

In the present invention, a network, a base station, and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type.

In the present invention, sidelink and PC5 may be used interchangeably, and an RLC channel, an RLC entity, and an RLC bearer may be used interchangeably. In addition, PC5 is used for relay operations herein, and can therefore also be replaced with relay.

Hereinafter, a description will be given of related art of the present invention.

### Single-path and Multi-path Communication

Remote UE may be in communication connection with a base station via relay UE, and such a connection may be referred to as an indirect connection. The remote UE may operate in a mode in which there is only an indirect connection, and such a mode may be referred to as a single-path communication mode.

As shown in FIG. 1, UE and a base station may also communicate with each other via a direct connection and an indirect connection. The UE may be configured to simultaneously operate in a communication mode of a direct connection and an indirect connection, and such a communication mode may be referred to as multi-path communication. A path of the direct connection may be referred to as a direct path, and the direct path may use a Uu interface to perform communication. A path of an indirect connection may be referred to as a relay path or an indirect path, and on the indirect path, remote UE communicates with a base station via relay UE. The relay UE and the base station may communicate with each other using a Uu interface, and the remote UE and the relay UE may communicate with each other by using other connection means such as a PC5 connection or a Wi-Fi connection.

A path corresponding to a direct connection is a direct path, and a path corresponding to an indirect connection is an indirect path. In the case of multiple paths, one of the multiple paths may be defined as a primary path, and paths other than the primary path are secondary paths. The primary path may be a direct path or an indirect path. When the primary path is a direct path, a secondary path is an indirect path. When the primary path is an indirect path, a secondary path is a direct path.

It should be noted that the UE may also communicate directly with the base station, which is referred to as a direct connection, which is also a single-path operating mode. The UE may operate solely in a direct connection mode. In this mode, there is no relay UE, and accordingly, such UE cannot be referred to as remote UE.

It can be seen that the remote UE is relative to the relay UE. Remote UE is present only in a single-path or multi-path scenario in which relay UE is present, and for a single-path scenario in which no relay UE is present, for example, a direct connection, the UE cannot serve as remote UE.

The direct connection and the direct path are interchangeable herein. The indirect connection, the relay path, and the indirect path are interchangeable.

"Operating in the multi-path mode" may be used interchangeably herein with the expression "configured with multi-path".

Multi-path communication may also be replaced herein with multi-connection communication.

### Proximity services (ProSe) Communication Between UE (UE to UE, U2U communication)

A UE and a UE may be wirelessly connected to each other by using a proximity services communication means, so as to achieve transmission of data or signaling. The near field communication means mentioned herein primarily refers to a sidelink connection, or a Wi-Fi connection, or another connection means. A sidelink connection-based reference point between a UE unit and a UE unit is referred to as PC5, and therefore a sidelink-based connection between the UE may be referred to as a PC5 connection. Sidelink connection and PC5 connection are interchangeable herein. Such a PC5 connection may be identified by a pair of Layer-2 identities (IDs) typically including a source Layer-2 identity (ID) and a destination Layer-2 identity (ID). Such a PC5 connection may be simply referred to as a PC5 connection, a sidelink connection, or the like for or corresponding to a certain destination.

### UE-to-Network Relay (U2N relay)

As shown in FIG. 2, the left side is remote UE, the middle is relay UE, and the right side is a network. The remote UE and the relay UE may be connected to each other via the aforementioned PC5 interface, or Wi-Fi, or another connection means. The PC5 connection is mainly used as an example herein. The relay UE and the network may be connected via a Uu interface. The relay UE relays and forwards signaling and data between the remote UE and the network/base station.

### Uu interface

A wireless communication interface between UE and a base station. The UE may communicate with eNB over the Uu interface by using an E-UTRAN. The UE may also communicate with gNB over the Uu interface by using NR.

### Signal Radio Bearer (SRB) and Split SRB

During communication between the UE and the base station, the SRB is used to bear signaling. The UE encapsulates, via a Uu PDCP layer, data of messages to the network for air interface RRC connection setup, re-establishment, resume, etc., and then submits the same to a Uu RLC entity to be further encapsulated, borne on a Uu RLC channel, and submitted downwards layer by layer via Uu-MAC and Uu-PHY. Conversely, an RRC message transmitted by the network to the UE also arrives at the UE via the SRB. Such an SRB may be referred to as an SRB via a direct connection or an SRB via a direct path. In a multi-path configuration, such an SRB may be referred to as a direct SRB, and may also be referred to as a direct bearer.

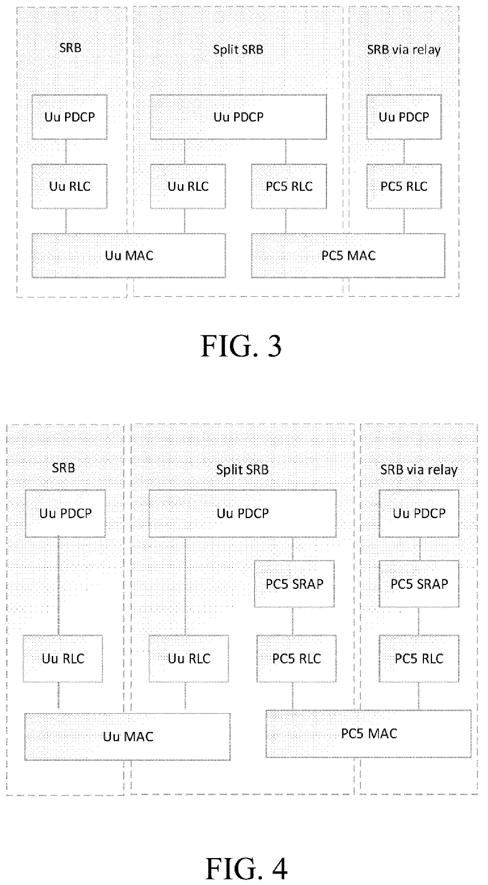

In the multi-path configuration, the UE may be configured with a multi-path (MP) split SRB (which is simply referred to as a split SRB herein), the protocol structure of which is shown in FIG. 3, and a PDCP entity is associated with at least one Uu RLC entity and at least one PC5 RLC entity. After the Uu PDCP layer encapsulates data, the UE may submit the encapsulated data to the Uu RLC entity or the PC5 RLC entity according to a submission rule. If the data is submitted to Uu RLC, processing is the same as that in the case of the SRB. If the data is submitted to PC5 RLC, the data is borne on a PC5 RLC channel after further encapsulation, submitted downwards layer by layer via PC5-MAC and PC5-PHY, and finally transmitted to the base station/network via a relay path. If the data is submitted to Uu RLC, as in the case of the SRB, the data is finally transmitted to the base station/network via a direct path. Such a split SRB may be referred to as a multi-path split SRB configured on a multi-path, or a split SRB via relay, or a split bearer. In a PDCP layer, a PDCP entity may be configured with a primary path, and if the primary path of the PDCP entity corresponds to a relay or an indirect connection, data is generally submitted to the PC5 RLC entity. Conversely, if the primary path corresponds to a direct connection, data is generally submitted to the Uu RLC entity. Only when arriving data exceeds a certain threshold is a part of the data submitted to an RLC entity corresponding to a secondary path. The PDCP entity may also be configured to be in a duplication mode, in which the PDCP layer, after encapsulating the data, generates identical PDCP PDUs to transmit same to the Uu RLC entity and the PC5 RLC entity associated therewith, respectively.

In addition, the PC5 RLC entity associated with the PDCP entity in the protocol structure in FIG. 3 may additionally be associated with an SRAP entity for routing data. That is, as shown in FIG. 4, a data packet distributed by the PDCP entity to the PC5 RLC entity may first be transmitted to the PC5 SRAP entity associated with this PRC RLC entity, and then transmitted to the PC5 RLC entity after routing information is added.

In the multi-path configuration, the UE may be further configured with an SRB via relay, which may also be referred to as an indirect SRB. The protocol structure thereof is as shown in FIG. 3. After the Uu PDCP layer encapsulates data, the encapsulated data is submitted to a PC5 RLC entity to be further encapsulated, borne on a PC5 RLC channel, submitted downwards layer by layer via PC5 MAC and PC5 PHY, transmitted to relay UE, and then forwarded to the network/base station. Conversely, an RRC message transmitted by the network to the UE may also arrive at the UE via an SRB via relay via the relay UE. Such an SRB via relay may also be referred to as an SRB via a relay path or an SRB via an indirect connection, or an indirect bearer.

Similarly, a data radio bearer (DRB) is used to bear data, is also referred to as a data bearer, has the same operating mode as the SRB, and may also be configured as a direct DRB, an indirect DRB, and an MP split DRB. The description will not be provided again here.

According to contents that are borne, signal radio bearers (SRBs) may be divided into the following types:
SRB0: used to bear an RRC message transmitted using a logical channel of a common control channel (CCCH).
SRB1: used to bear an RRC message and a non-access stratum message (NAS) transmitted using a logical channel corresponding to a dedicated control channel (DCCH).
SRB2: a non-access stratum (NAS) message and an RRC message including measurement information transmitted using a logical channel corresponding to a dedicated control channel.

Herein, SRB1 is taken as an example, but is not limited to other SRBs. The SRB hereinafter may also be replaced by a DRB.

Specific embodiments are provided below to describe a processing method of the present invention.

### Embodiment 1

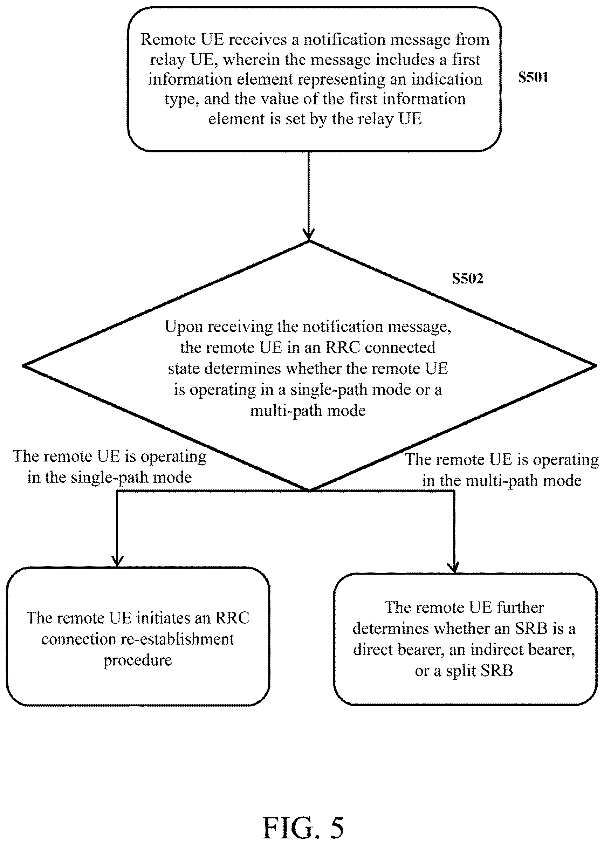

The method of the present invention is described below with reference to FIG. 5.

FIG. 5 is a flowchart of a processing method performed by UE according to an embodiment of the present invention.

In the present embodiment, as shown in FIG. 5, the following steps are included:
Step one (S501): receiving, by remote UE from relay UE, a PC5 RRC message as a notification message, e.g., a sidelink notification message NotificationMessageSidelink message, the message including an information element indication Type (sometimes referred to as a "first information element") indicating an indication type.

The value of this information element is set by the relay UE:
When the relay UE initiates transmission of the NotificationMessageSidelink message due to an occurrence of a radio link failure (RLF) on a Uu interface between the relay UE and a base station/network side, the value of the information element indication Type may be set to relayUE-Uu-RLF (sometimes referred to as a "first value").

When the relay UE initiates transmission of the NotificationMessageSidelink message due to reception of a reconfiguration message including a synchronization identity (reconfiguration with sync), the value of the information element indication Type may be set to relayUE-HO (sometimes referred to as a "second value").

When the relay UE initiates transmission of the NotificationMessageSidelink message due to an occurrence of cell reselection, the value of the information element indication Type may be set to relayUE-CellReselection (sometimes referred to as a "third value").

When the relay UE initiates transmission of the NotificationMessageSidelink message due to an occurrence of an RRC connection setup failure or a connection resumption failure on a Uu interface, the value of the information element indication Type may be set to relayUE-Uu-RRC-Failure (sometimes referred to as a "fourth value").

Step two (S502): upon receiving the above message, determining, by the remote UE in an RRC connected state, whether the remote UE is operating in a single-path or multi-path mode (or determining whether the remote UE is configured with multi-path).

In one type of situation, the remote UE is operating in the single-path mode, that is, the remote UE is connected to the base station only through an indirect connection (or is not configured with multi-path), and the remote UE initiates the RRC connection re-establishment procedure.

In one type of situation, the remote UE is operating in the multi-path mode (or the remote UE is configured with multi-path), and the UE performs the following determination:
Whether an SRB such as SRB 1 is a direct bearer, an indirect bearer, or a split SRB.
- If SRB1 is an indirect bearer, the remote UE initiates the RRC connection re-establishment procedure.
   Preferably, in the case that SRB 1 is an indirect bearer, the remote UE may further determine whether the value of the information element indicationType included in the NotificationMessageSidelink message corresponds to relayUE-HO (i.e., the second value):
   If the value of the information element indicationType corresponds to relayUE-HO (i.e., the second value), the remote UE may not initiate the RRC connection re-establishment procedure; and
   If the value of the information element indicationType corresponds to relayUE-Uu-RLF (i.e., the first value), relayUE-Uu-RRC-Failure (i.e., the fourth value), or relayUE-CellReselection (i.e., the third value), that is, the value is not relayUE-HO (i.e., the second value), the remote UE initiates the RRC connection re-establishment procedure.
- If SRB 1 is a direct bearer, the remote UE may not initiate the RRC connection re-establishment procedure.
- If SRB 1 is a split SRB, it is further determined whether a primary path of the split SRB corresponds to a direct connection (or a Uu interface) or an indirect connection (or a relay):
   If the primary path of SRB 1 acting as a split SRB is an indirect connection (or a relay), the remote UE initiates the RRC connection re-establishment procedure; and
   If the primary path of SRB 1 acting as a split SRB is a direct connection (or a Uu interface), the remote UE may not initiate the RRC connection re-establishment procedure.

### Embodiment 2

Embodiment 2 differs from Embodiment 1 in that:
If SRB 1 is a direct bearer, or if SRB 1 is a split SRB, the remote UE may initiate path failure reporting.

Optionally, if SRB1 is a split SRB, it is further determined whether a primary path of this split SRB is a direct connection or an indirect connection.

If the primary path of SRB 1 acting as a split SRB is an indirect connection, the primary path may be set as a direct connection.

Preferably, such a path failure report does not need to be generated in the case that Indication Type is relayUE-HO (i.e., the second value), that is, it is indicated that the relay UE has been handed over, so that another implementation of the present embodiment may be as follows:
If SRB 1 is a direct bearer, or if SRB 1 is a split SRB, and in the case that the value of the information element indicationType included in the received NotificationMessageSidelink message does not correspond to relayUE-HO (i.e., the second value), the remote UE may initiate the path failure reporting.

Alternatively,
If SRB 1 is a direct bearer, or if SRB 1 is a split SRB, and in the case that the value of the information element indicationType included in the received NotificationMessageSidelink message corresponds to relayUE-Uu-RLF (i.e., the first value), relayUE-Uu-RRC-Failure (i.e., the fourth value), or relayUE-CellReselection (i.e., the third value), the remote UE may initiate the path failure reporting.

### Embodiment 3

Embodiment 3 differs from Embodiment 1 in respect of step two.

Step one: the same as that in Embodiment 1.

Step two: upon receiving the above message, the remote UE in the RRC connected state performs the following determination:
Whether SRB1 is a direct bearer, an indirect bearer, or a split SRB.
- In one type of situation, SRB1 is an indirect bearer, and the remote UE may initiate the RRC connection re-establishment procedure.
   Preferably, in the case that SRB 1 is an indirect bearer, the remote UE may further determine whether the value of the information element indicationType included in the NotificationMessageSidelink message corresponds to relayUE-HO (i.e., the second value):
   If the value of the information element indicationType corresponds to relayUE-HO (i.e., the second value), the remote UE may not initiate the RRC connection re-establishment procedure; and
   If the value of the information element indicationType corresponds to relayUE-Uu-RLF (i.e., the first value), relayUE-Uu-RRC-Failure (i.e., the fourth value), or relayUE-CellReselection (i.e., the third value), that is, the value is not relayUE-HO (i.e., the second value), the remote UE initiates the RRC connection re-establishment procedure.
- In one type of situation, SRB1 is a direct bearer, and the remote UE may not initiate the RRC connection re-establishment procedure.
- In one type of situation, SRB1 is a split SRB, and it may be further determined whether a primary path of this split SRB is a direct connection or an indirect connection:
   If the primary path of SRB1 acting as a split SRB is an indirect connection, the remote UE may initiate the RRC connection re-establishment procedure; and
   If the primary path of SRB1 acting as a split SRB is a direct connection, the remote UE may not initiate the RRC connection re-establishment procedure.

### Embodiment 4

Embodiment 4 differs from Embodiment 3 in that:
If SRB1 is a direct bearer, or if SRB1 is a split SRB, the remote UE may initiate path failure reporting.

Optionally, if SRB1 is a split SRB, it is further determined whether a primary path of this split SRB is a direct connection or an indirect connection.

If the primary path of SRB 1 acting as a split SRB is an indirect connection, the primary path may be set as a direct connection.

Preferably, such a path failure report does not need to be generated in the case that Indication Type is relayUE-HO (i.e., the second value), that is, it is indicated that the relay UE has been handed over, so that another implementation of the present embodiment may be as follows:
If SRB1 is a direct bearer, or if SRB1 is a split SRB, and in the case that the value of the information element indicationType included in the received NotificationMessageSidelink message does not correspond to relayUE-HO (i.e., the second value), the remote UE may initiate the path failure reporting.

Alternatively,
If SRB1 is a direct bearer, or if SRB1 is a split SRB, and in the case that the value of the information element indicationType included in the received NotificationMessageSidelink message corresponds to relayUE-Uu-RLF (i.e., the first value) or relayUE-Uu-RRC-Failure (i.e., the fourth value), the remote UE may initiate the path failure reporting.

### Embodiment 5

Embodiment 5 differs from Embodiment 1 in respect of step two.

Step one: the same as that in Embodiment 1.

Step two: upon receiving the above message, the remote UE in the RRC connected state performs the following determination:
Whether SRB 1 is a direct bearer, an indirect bearer, or a split SRB.
- In one type of situation, SRB1 is an indirect bearer, and the remote UE may initiate the RRC connection re-establishment procedure.
   Preferably, in the case that SRB 1 is an indirect bearer, the remote UE may further determine whether the value of the information element indicationType included in the NotificationMessageSidelink message corresponds to relayUE-HO (i.e., the second value):
   If the value of the information element indicationType corresponds to relayUE-HO (i.e., the second value), the remote UE may not initiate the RRC connection re-establishment procedure; and
   If the value of the information element indicationType corresponds to relayUE-Uu-RLF (i.e., the first value), relayUE-Uu-RRC-Failure (i.e., the fourth value), or relayUE-CellReselection (i.e., the third value), that is, the value is not relayUE-HO (i.e., the second value), the remote UE initiates the RRC connection re-establishment procedure.
- In one type of situation, SRB1 is not an indirect bearer, that is, SRB1 may be a direct bearer or a split SRB, and the remote UE may initiate path failure reporting.

Preferably, if SRB1 is a split SRB, it is further determined whether a primary path of this split SRB is a direct connection or an indirect connection. If the primary path of SRB1 acting as a split SRB is an indirect connection, the primary path may be set as a direct connection.

Preferably, such a path failure report does not need to be generated in the case that Indication Type is relayUE-HO (i.e., the second value), that is, it is indicated that the relay UE has been handed over, so that another implementation of the present embodiment may be as follows:
If SRB 1 is not an indirect bearer, that is, SRB1 may be a direct bearer or a split SRB, and in the case that the value of the information element indicationType included in the received NotificationMessageSidelink message does not correspond to relayUE-HO (i.e., the second value), the remote UE may initiate the path failure reporting.

Alternatively,
If SRB1 is not an indirect bearer, that is, SRB1 may be a direct bearer or a split SRB, and in the case that the value of the information element indicationType included in the received NotificationMessageSidelink message corresponds to relayUE-Uu-RLF (i.e., the first value) or relayUE-Uu-RRC-Failure (i.e., the fourth value), the remote UE may initiate the path failure reporting.

### Embodiment 6

Embodiment 6 differs from Embodiment 1 in respect of step two.

Step one: the same as that in Embodiment 1.

Step two: upon receiving the above message, determining, by the remote UE in an RRC connected state, whether the remote UE is operating in a single-path or multi-path mode (or determining whether the remote UE is configured with multi-path).

In one type of situation, the remote UE is operating in the single-path mode, that is, the remote UE is connected to the base station only through an indirect connection (or is not configured with multi-path), and the remote UE initiates the RRC connection re-establishment procedure.

In one type of situation, the remote UE is operating in the multi-path mode (or the remote UE is configured with multi-path), and the UE determines whether a primary path in the multi-path is an indirect connection:
If the UE is configured with a multi-path operating mode, and the primary path therein is an indirect connection (or the secondary path is a direct connection), the remote UE initiates the RRC connection re-establishment procedure; and
If the UE is configured with the multi-path operating mode, and the primary path therein is a direct connection (or the secondary path is an indirect connection), the remote UE may not perform the above operation.

The definition of the primary path in the above determination may include, but is not limited to, the following modes:
Mode 1: the primary path may refer to a path used by the UE when setting up or resuming an RRC connection with the base station/network side:
For example, when setting up an RRC connection with the base station/network side, the UE is in a direct connection mode, and then, configured by the network side, a working path of an indirect connection is added, thereby implementing a multi-path operating mode. In such a case, the primary path is a direct connection, and accordingly, when the UE is subsequently configured with multi-path, the secondary path may be an indirect connection.

As another example, when setting up an RRC connection with the base station/network side, the UE is in an indirect connection mode, that is, sets up the connection with the network side via relay UE, and then, under configuration of the network side, a working path of a direct connection is added, thereby implementing a multi-path operating mode. In such a case, the primary path is an indirect connection. Accordingly, the secondary path may be a direct connection when the UE is subsequently configured with multi-path.

Mode 2: the primary path may also refer to a path used by the UE when reestablishing an RRC connection with the base station/network side.

Mode 3: when the UE is configured with multiple paths by the network side, the network side further indicates which one of the multiple paths is the primary path and which path is the secondary path. According to configuration information of the network side, the UE may determine whether the primary path is a direct connection or an indirect connection.

Mode 4: after the UE determines a primary cell (Pcell), a path corresponding thereto is a primary path, and the other paths are secondary paths.

### Embodiment 7

Unlike the foregoing embodiments, in the present embodiment, in order to avoid ineffective RRC connection re-establishment, the relay UE does not transmit the NotificationMessageSidelink message to the remote UE in a specific case.

Step one: receiving, by the relay UE from the base station or the network side, a reconfiguration message (i.e., a handover command) including a synchronization identity.

The message may include indication information indicating that the relay UE does not need to transmit the NotificationMessageSidelink message to the remote UE. Such indication information may be in the form of an information element, e.g., defined as an information element named *WithoutNotification* (sometimes referred to as a "second information element").

Optionally, the indication information further indicates identification information of the remote UE. For example, the value of the IE *Without Notification* may be identification information of one or more remote UEs.

Step two: upon receiving the reconfiguration message (i.e., the handover command) including the synchronization identity, if the information element *Without Notification* is included therein, skipping, by the relay UE, transmitting the NotificationMessageSidelink message to one or more remote UEs corresponding to the value of *WithoutNotification*; that is, for these related remote UEs, skipping, by the relay UE, initiating transmission of the NotificationMessageSidelink message.

Preferably, the value of the information element *WithoutNotification* may be null, so that the relay UE does not transmit the NotificationMessageSidelink message to all remotes, remote UE here referring to a remote UE that has set up a PC5 connection with the relay UE.

As compensation, if the reconfiguration message (i.e., the handover command) received in step one and including the synchronization identity does not include the information element *Without Notification,* the relay UE initiates transmission of the NotificationMessageSidelink message, and sets the value of the information element indication Type therein to relayUE-HO (i.e., the second value).

Another implementation of the present embodiment may be:
When the relay UE receives the reconfiguration message including the synchronization identity (reconfiguration with sync), and the reconfiguration message does not include the information element *Without Notification,* the relay UE initiates transmission of the NotificationMessageSidelink message, and sets the value of the information element indication Type to relayUE-HO (i.e., the second value).

Preferably, when a gNB transmits to relay UE a reconfiguration message including a synchronization identity, if a target cell included therein and a source cell of the current relay UE belong to the same base station, the base station may include the information element *Without Notification* in the reconfiguration message, and optionally, set an identity of remote UE therein to correspond to remote UE configured with multi-path.

The present embodiment may be used in combination with the foregoing embodiments, or may be used alone.

### Embodiment 8

The aforementioned "path failure reporting" may include the following operation:
initiating, by the remote UE, a failure information reporting procedure (initiate the failure information procedure). In the procedure, the UE generates a failure information (FailureInformation) message, and optionally, information such as an SL-RLF having occurred on a link between the UE and the relay UE, or an indirect connection failure having occurred, or an indirect path failure is indicated in the message. In addition, the message is submitted to a lower layer for transmission, so as to be transmitted to the base station.

The remote UE may also perform a sidelink UE information reporting procedure (sidelink UE information for NR sidelink communication procedure), and transmit a sidelink UE information message to the base station/network side. The message includes a sidelink failure report list (sl-failure list), and a sidelink destination identity (sl-DestinationIdentity) therein is set to correspond to a relay UE identity.

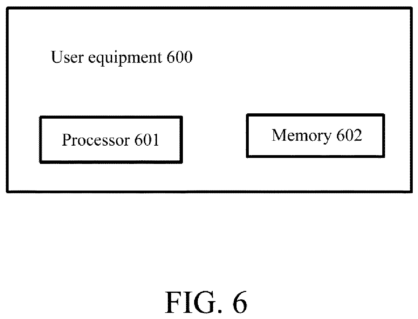

FIG. 6 is a simplified structural block diagram of a user equipment according to the present invention.

As shown in FIG. 6, the user equipment 600 includes at least a processor 601 and a memory 602. The processor 601 may include, for example, a microprocessor, a microcontroller, an embedded processor, and the like. The memory 602 may include, for example, a volatile memory (for example, a random access memory (RAM)), a hard disk drive (HDD), a non-volatile memory (for example, a flash memory), or other memory systems. The memory 602 has program instructions stored thereon. When the instructions are run by the processor 601, one or several steps in the processing method for UE of the present disclosure can be performed.

The method and related equipment according to the present disclosure have been described above in conjunction with preferred embodiments. It should be understood by those skilled in the art that the method shown above is only exemplary, and the above-described embodiments can be combined with one another as long as no contradiction arises. The method of the present invention is not limited to the steps or sequences illustrated above.

The user equipment shown above may include more modules, for example, may also include modules that can be developed or developed in the future and can be used for base stations, MMEs, or UE, and so on. Various identifiers shown above are only exemplary, not for limitation, and the present disclosure is not limited to specific information elements serving as examples of these identifiers. Those skilled in the art could make various alterations and modifications according to the teachings of the illustrated embodiments.

It should be understood that the above embodiments of the present disclosure may be implemented through software, hardware, or a combination of software and hardware. For example, various components in the base station and user equipment in the above embodiments can be implemented by multiple devices, and these devices include, but are not limited to: an analog circuit device, a digital circuit device, a digital signal processing (DSP) circuit, a programmable processor, an application-specific integrated circuit (ASIC), a field-programmable gate array (FPGA), a complex programmable logic device (CPLD), and the like.

The program running on the device according to the present invention may be a program that enables the computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment, the method being performed during communication performed between the user equipment (UE) and a base station via a single path or multiple paths, comprising the following steps:
receiving, by a remote UE, a notification message from a relay UE, wherein the message included a first information element indicating an indication type, and the value of the first information element is set by the relay UE; and
upon receiving the notification message, determining, by the remote UE in a radio resource control (RRC) connected state, whether the remote UE is operating in a single-path mode or a multi-path mode,
if the remote UE is operating in the single-path mode, initiating, by the remote UE, an RRC connection re-establishment procedure, and
if the remote UE is operating in the multi-path mode, further determining, by the remote UE, whether a signaling radio bearer (SRB) is a direct bearer, an indirect bearer, or a split SRB.

2. The method performed by user equipment according to claim 1, wherein
when the relay UE initiates transmission of the notification message due to an occurrence of a radio link failure (RLF) on a Uu interface between the relay UE and the base station, the value of the first information element is set to a first value;
when the relay UE initiates transmission of the notification message due to reception of a reconfiguration message including a synchronization identity, the value of the first information element is set to a second value;
when the relay UE initiates transmission of the notification message due to an occurrence of cell reselection, the value of the first information element is set to a third value; and
when the relay UE initiates transmission of the notification message due to an occurrence of an RRC connection setup failure or a connection resumption failure on a Uu interface, the value of the first information element is set to a fourth value.

3. The method performed by user equipment according to claim 2, wherein
if the SRB is a direct bearer, the remote UE does not initiate the RRC connection re-establishment procedure;
if the SRB is an indirect bearer, the remote UE initiates the RRC connection re-establishment procedure; and
if the SRB is a split SRB, the remote UE further determines whether a primary path of the split SRB corresponds to a direct connection not via the relay UE or an indirect connection via the relay UE.

4. The method performed by user equipment according to claim 3, wherein
in the case that the SRB is an indirect bearer, the remote UE further determines whether the value of the first information element included in the notification message is the second value,
if the value of the first information element is the second value, the remote UE does not initiate the RRC connection re-establishment procedure, and
if the value of the first information element is not the second value, the remote UE initiates the RRC connection re-establishment procedure.

5. The method performed by user equipment according to claim 3, wherein
in the case that the SRB is a split SRB,
if the primary path thereof is a direct connection, the remote UE does not initiate the RRC connection re-establishment procedure, and
if the primary path thereof is an indirect connection, the remote UE initiates the RRC connection re-establishment procedure.

6. The method performed by user equipment according to claim 3, wherein
if the SRB is a direct bearer or a split SRB, the remote UE initiates path failure reporting.

7. The method performed by user equipment according to claim 3, further comprising the following steps:
receiving, by the relay UE from the base station, a reconfiguration message including a synchronization identity; and
upon receiving the reconfiguration message including the synchronization identity, if a second information element of indication information representing that the notification message does not need to be transmitted to the remote UE is included therein, skipping, by the relay UE, initiating transmission of the notification message.

8. The method performed by user equipment according to claim 3, further comprising the following steps:
receiving, by the relay UE from the base station, a reconfiguration message including a synchronization identity; and
upon receiving the reconfiguration message including the synchronization identity, if a second information element of indication information representing that the notification message does not need to be transmitted to the remote UE is not included therein, initiating, by the relay UE, transmission of the notification message, and setting the value of the first information element to the second value.

9. The method performed by user equipment according to claim 6, wherein
the path failure reporting comprises:
initiating, by the remote UE, a failure information reporting procedure; and
performing, by the remote UE, a sidelink UE information reporting procedure.

10. User equipment, comprising:
a processor; and
a memory storing instructions,
wherein the instructions, when run by the processor, perform the method according to any one of claims 1 to 9.
